# EUROPEAN PATENT APPLICATION

(11) **EP 3 869 353 A2**
(43) Date of publication of application: **25.08.2021**
(21) Application number: 21162794.8
(22) Date of filing: 16.03.2021
(51) Int. Cl.: G06F 16/00

(54) **INFORMATION EXTRACTION METHOD, INFORMATION EXTRACTION DEVICE AND ELECTRONIC EQUIPMENT**

(30) Priority: 16.03.2020 CN 202010183085
(71) Applicant: Beijing Baidu Netcom Science and Technology Co., Ltd., Beijing 100085 (CN)
(72) Inventor: WANG, Xin, Beijing, 100085 (CN); SUN, Mingming, Beijing, 100085 (CN); LI, Ping, Beijing, 100085 (CN)
(74) Representative: Studio Torta S.p.A.

(57) **Abstract**

This application discloses an information extraction method, an information extraction device and electronic equipment, and relates to the field of data mining. The specific implementation scheme includes: obtaining text information; obtaining a first primary relation tuple in the text information; obtaining N primary relation tuples, where the N primary relation tuples include at least one second primary relation tuple obtained according to a parameter of the first primary relation tuple, N being a positive integer; and determining an information extraction result of the text information according to the first primary relation tuple and the N primary relation tuples. When extracting the text information, the first primary relation tuple of the text information is extracted first, and then the primary relation tuple extraction is performed on the parameter of the first primary relation tuple, thus this method of gradual extraction from a large range to a small range can make ranges covered by the extraction more detailed, thereby obtaining the more complete and more accurate extraction result.

## Description

### TECHNICAL FIELD

This application relates to data mining technology in the field of computer technologies, and in particular to an information extraction method, an information extraction device and electronic equipment.

### BACKGROUND

Information extraction plays a quite important role in artificial intelligence applications, and more and more upper-level applications rely on a result of information extraction. For example, both the construction of knowledge base and the construction of event logic graph rely on technologies of entity relation extraction, event extraction, and causality extraction. Inquiries in the fields such as law and medical care, and the construction of a decision support system also rely on a result of information extraction.

The result of information extraction often exist in a form of relation tuples. However, the omission of a tuple, and the omission and error of a parameter in the tuple affect the result of information extraction to varying degrees. That is to say, the accuracy and comprehensiveness of information extraction are relatively low with existing information extraction methods.

### SUMMARY

Embodiments of the present application provide an information extraction method, an information extraction device and electronic equipment to solve a problem of low accuracy and comprehensiveness of existing information extraction.

In order to solve the above technical problem, the present application is implemented as follows:
An information extraction method is provided according to a first aspect of the present application, including:
obtaining text information;
obtaining a first primary relation tuple in the text information;
obtaining N primary relation tuples, where the N primary relation tuples include at least one second primary relation tuple obtained according to a parameter of the first primary relation tuple, and N is a positive integer; and
determining an information extraction result of the text information according to the first primary relation tuple and the N primary relation tuples,
where the first primary relation tuple is a relation tuple that is not included in other relation tuples in the text information, and the second primary relation tuple is a relation tuple that is not included in other relation tuples in the parameter of the first primary relation tuple.

Further, the N primary relation tuples further include:
at least one third primary relation tuple obtained from a parameter of the second primary relation tuple, where the third primary relation tuple is a relation tuple that is not included in other relation tuples in the parameter of the second primary relation tuple.

Further, the obtaining N primary relation tuples includes:
obtaining the at least one second primary relation tuple from the parameter of the first primary relation tuple; and
performing primary relation tuple extraction on a parameter of a primary relation tuple obtained for an i-th time among the N primary relation tuples to obtain an (i+1)-th obtained primary relation tuple, where the at least one second primary relation tuple is a primary relation tuple obtained for a first time among the N primary relation tuples, and a parameter in a primary relation tuple obtained for a last time among the N primary relation tuples does not include a relation tuple, i being a positive integer less than or equal to the N.

Further, the obtaining the first primary relation tuple in the text information includes:
inputting the text information to a neural network model to obtain the first primary relation tuple of the text information, where the neural network model includes an encoder and a decoder, the encoder is configured to obtain an encoding feature according to the text information, and the decoder is configured to obtain the first primary relation tuple of the text information according to the encoding feature.

Further, the encoder is determined by performing context prediction on unlabeled training corpus.

An information extraction device is provided according to a second aspect of the present application, including:
a first obtaining module, configured to obtain text information;
a second obtaining module, configured to obtain a first primary relation tuple in the text information;
a third obtaining module, configured to obtain N primary relation tuples, where the N primary relation tuples include at least one second primary relation tuple obtained according to a parameter of the first primary relation tuple, and N is a positive integer; and
a determining module, configured to determine an information extraction result of the text information according to the first primary relation tuple and the N primary relation tuples,
where the first primary relation tuple is a relation tuple that is not included in other relation tuples in the text information, and the second primary relation tuple is a relation tuple that is not included in other relation tuples in the parameter of the first primary relation tuple.

Further, the N primary relation tuples further include:
at least one third primary relation tuple obtained from a parameter of the second primary relation tuple, where the third primary relation tuple is a relation tuple that is not included in other relation tuples in the parameter of the second primary relation tuple.

Further, the third obtaining module includes:
a first obtaining submodule, configured to obtain the at least one second primary relation tuple from the parameter of the first primary relation tuple; and
a second obtaining submodule, configured to primary relation tuple extraction on a parameter of a primary relation tuple obtained for an i-th time among the N primary relation tuples to obtain an (i+1)-th obtained primary relation tuple, where the at least one second primary relation tuple is a primary relation tuple obtained for a first time among the N primary relation tuples, and a parameter in a primary relation tuple obtained for a last time among the N primary relation tuples does not include a relation tuple, i being a positive integer less than or equal to the N.

Further, the second obtaining module is configured to:
input the text information to a neural network model to obtain the first primary relation tuple of the text information, where the neural network model includes an encoder and a decoder, the encoder is configured to obtain an encoding feature according to the text information, and the decoder is configured to obtain the first primary relation tuple of the text information according to the encoding feature.

Further, the encoder is determined by performing context prediction on unlabeled training corpus.

Electronic equipment is provided according to a third aspect of the present application, including:
at least one processor; and
a memory communicatively connected to the at least one processor,
where the memory stores an instruction that is executable by the at least one processor, and the instruction, when executed by the at least one processor, causes the at least one processor to be capable of executing the method according to the first aspect.

A non-transitory computer-readable storage medium is provided according to a fourth aspect of the present application, storing a computer instruction, where the computer instruction is configured to be executed by a computer to implement the method according to the first aspect.

A computer program product is provided according to a fifth aspect of the present application. The computer program product includes a computer instruction that, when executed by a computer, causes the computer to implement or carry out the method according to the first aspect.

An embodiment in the above application has the following advantages or beneficial effects:
text information is obtained; a first primary relation tuple in the text information is obtained; N primary relation tuples is obtained, where the N primary relation tuples include at least one second primary relation tuple obtained according to a parameter of the first primary relation tuple, and N is a positive integer; and an information extraction result of the text information is determined according to the first primary relation tuple and the N primary relation tuples, where the first primary relation tuple is a relation tuple that is not included in other relation tuples in the text information, and the second primary relation tuple is a relation tuple that is not included in other relation tuples in the parameter of the first primary relation tuple. When extracting the text information, the first primary relation tuple of the text information is extracted first, and then a primary relation tuple is extracted from the parameter of the first primary relation tuple, thus this method of gradual extraction from a large range to a small range (i.e., a length of the text included in the object for the primary relation tuple extraction is gradually shortened) can make ranges covered by the extraction more detailed, so as to obtain the more complete and more accurate extraction result.

By extracting primary relation tuples from parameters of the second primary relation tuple, more primary relation tuples can be obtained. This way of extracting primary relation tuples from parameters of the obtained primary relation tuple can make coverage ranges of the extraction more detailed, so as to obtain more complete and more accurate extraction results.

By extracting a primary relation tuple from the text information, and then extracting a primary relation tuple from parameters of the obtained primary relation tuple, it can ensure that all the components (each word and phrase) in the text information are covered, and at the same time, it is ensured that relation tuples included in other relation tuples also have the opportunity to be identified and processed. In addition, in the process of gradual extraction, the extracted objects (that is, parameters) gradually become shorter, which effectively avoids long-distance cascading errors in grammar and syntax, and improves the accuracy of information extraction.

The neural network model includes an encoder and a decoder. Primary relation tuples can be extracted through the neural network model from the text information, which improves the accuracy of extraction.

The encoder can be determined by the context prediction of the unlabeled training corpus. This encoder determination method can reduce the data construction cost of constructing the neural network model.

Other effects of the above-mentioned optional methods will be described below in conjunction with specific embodiments.

### BRIEF DESCRIPTION OF THE DRAWINGS

The drawings are used to better understand the solution, and do not constitute a limitation to the application, where:
Fig. 1 is a flowchart of an information extraction method provided by an embodiment of the present application;
Fig. 2 is a schematic diagram of an iterative decomposition device provided by an embodiment of the present application;
Fig. 3 is a structural diagram of an information extraction device provided by an embodiment of the present application; and
Fig. 4 is a block diagram of electronic equipment used to implement the information extraction method of an embodiment of the present application.

### DETAILED DESCRIPTION

The following describe exemplary embodiments of the present application with reference to the accompanying drawings, which include various details of the embodiments of the present application to facilitate understanding, and should be considered as merely exemplary. Therefore, a person of ordinary skill in the art should realize that various changes and modifications can be made to the embodiments described herein without departing from the scope and spirit of the present application. Likewise, for clarity and conciseness, descriptions of well-known functions and structures are omitted in the following descriptions.

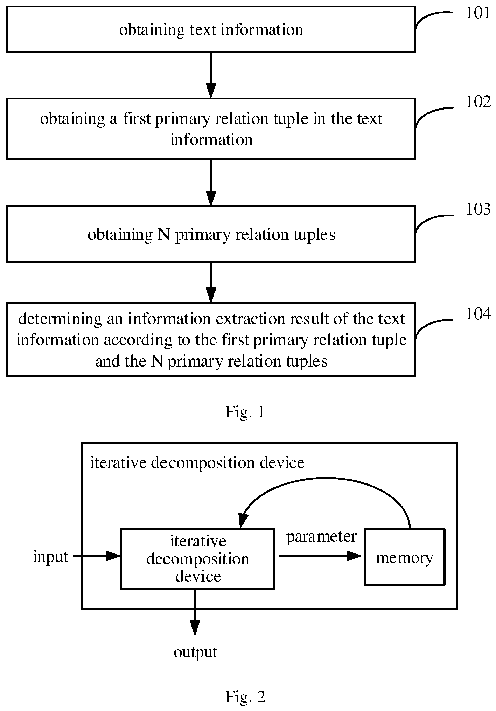

Referring to Fig. 1, Fig. 1 is a flowchart of an information extraction method provided by an embodiment of the present application. As shown in Fig. 1, this embodiment provides an information extraction method applied to electronic equipment and includes the following steps:
step 101: obtaining text information.

The text information may be information inputted by a user, or search result information that is obtained by a search engine based on query information inputted by the user after querying, which is not limited herein. The text information may be a paragraph of text.

Step 102: obtaining a first primary relation tuple in the text information, where the first primary relation tuple is a relation tuple that is not included in other relation tuples in the text information.

The first primary relation tuple is a relation tuple that is not included in other relation tuples in the text information. For example, if the text information includes multiple relation tuples, there is one and only one primary relation tuple among the multiple relation tuples. The first primary relation tuple is a relation tuple that is not included by other relation tuples among the multiple relation tuples. For example, the text information includes three relation tuples A, B, and C, where A includes B and C, then A is the first primary relation tuple. The text information at most includes one primary relation tuple.

The first primary relation tuple is also a relation tuple, and has a characteristic of the relation tuple, that is, the first primary relation tuple includes a core word and at least one parameter. For example, in a case that text information is "his elder brother who has served as a soldier said, you are not like an officer", the core word of the first primary relation tuple of the text information is "{0} said, {1}", and parameters of the first primary relation tuple are "his elder brother who has served as a soldier" and "you are not like an officer", where "{0}" represents the first parameter "his elder brother who has served as a soldier", and {1} represents the second parameter "you are not like an officer".

Step 103: obtaining N primary relation tuples, where the N primary relation tuples include at least one second primary relation tuple obtained according to a parameter of the first primary relation tuple, and N is a positive integer, and the second primary relation tuple is a relation tuple that is not included in other relation tuples in the parameter of the first primary relation tuple.

The second primary relation tuple is obtained according to the parameter of the first primary relation tuple, and the second primary relation tuple is a relation tuple that is not included in other relation tuples in the parameter of the first primary relation tuple. The first primary relation tuple may include one or more parameters, and primary relation tuple extraction is performed on each parameter to obtain the second primary relation tuple. At most one second primary relation tuple is obtained from each parameter. If one parameter includes multiple relation tuples, there is one and only one primary relation tuple among the multiple relation tuples. The second primary relation tuple is a relation tuple that is not included in other relation tuples among the multiple relation tuples.

Following the example in step 102, the primary relation tuple extraction is performed on the parameter of the first primary relation tuple "his elder brother who has served as a soldier", the obtained second primary relation tuple has a core word of "{0} has served as {1}", and has parameters of "his elder brother" and "soldier", where "{0}" represents the first parameter "his elder brother", and {1} represents the second parameter "soldier".

The primary relation tuple extraction is performed on the parameter(s) of the first primary relation tuple to obtain the second primary relation tuple. Similarly, the primary relation tuple extraction may be performed on the parameter(s) of the second primary relation tuple to obtain more primary relation tuples. The N primary relation tuples include the second primary relation tuple, and may also include the primary relation tuple(s) obtained by extracting parameter(s) of the second primary relation tuple.

Step 104: determining an information extraction result of the text information according to the first primary relation tuple and the N primary relation tuples.

The obtained first primary relation tuple and N primary relation tuples are used as the information extraction result of the text information. When performing extraction on the text information, the first primary relation tuple of the text information is extracted first, and then the primary relation tuple extraction is performed on the parameter(s) of the first primary relation tuple, thus this method of gradual extraction from a large range to a small range can make ranges covered by the extraction more diverse, so as to obtain the more complete and more accurate extraction result.

In this embodiment, text information is obtained; a first primary relation tuple in the text information is obtained; N primary relation tuples is obtained, where the N primary relation tuples include at least one second primary relation tuple obtained according to a parameter of the first primary relation tuple, and N is a positive integer; and an information extraction result of the text information is determined according to the first primary relation tuple and the N primary relation tuples, where the first primary relation tuple is a relation tuple that is not included in other relation tuples in the text information, and the second primary relation tuple is a relation tuple that is not included in other relation tuples in the parameter of the first primary relation tuple. When extracting the text information, the first primary relation tuple of the text information is extracted first, and then a primary relation tuple is extracted from the parameter of the first primary relation tuple, thus this method of gradual extraction from a large range to a small range (i.e., a length of the text included in the object for the primary relation tuple extraction is gradually shortened) can make ranges covered by the extraction more detailed, so as to obtain the more complete and more accurate extraction result.

In an embodiment of the present application, the N primary relation tuples further include: at least one third primary relation tuple obtained from a parameter of the second primary relation tuple, where the third primary relation tuple is a relation tuple that is not included in other relation tuples in the parameter of the second primary relation tuple.

In this embodiment, after the second primary relation tuple is obtained, the primary relation tuple extraction can be continued on the parameter(s) of the second primary relation tuple to obtain more primary relation tuples. The N primary relation tuples include the second primary relation tuple, and further include the primary relation tuple obtained by extracting the parameter(s) of the second primary relation tuple, that is, the third primary relation tuple.

In this embodiment, more primary relation tuples are obtained by performing primary relation tuple extraction on the parameter(s) of the second primary relation tuple. This manner of performing primary relation tuple extraction on parameter(s) of the obtained primary relation tuples can make the extraction coverage more detailed, so as to obtain the more complete and accurate extraction result.

In an embodiment of the present application, the obtaining the N primary relation tuples includes:
obtaining the at least one second primary relation tuple from the parameter of the first primary relation tuple; and
performing primary relation tuple extraction on a parameter of a primary relation tuple obtained for an i-th time among the N primary relation tuples to obtain an (i+1)-th obtained primary relation tuple, where the at least one second primary relation tuple is a primary relation tuple obtained for a first time among the N primary relation tuples, and a parameter in a primary relation tuple obtained for a last time among the N primary relation tuples does not include a relation tuple, i being a positive integer less than or equal to the N.

In this embodiment, the N primary relation tuples include the second primary relation tuple obtained from the parameter(s) of the first primary relation tuple, and also include the third primary relation tuple obtained from the parameter(s) of the second primary relation tuple; and a primary relation tuple is continued to be extracted from the parameter(s) of the obtained third primary relation tuple, and so on, until parameter(s) of the newly obtained primary relation tuple do not include any relation tuple. In other words, the second primary relation tuple is the primary relation tuple obtained for the first time among the N primary relation tuples, and the primary relation tuple obtained for the last time among the N primary relation tuples does not include any relation tuple, where i is a positive integer less than or equal to the N.

The description is given below by taking an example of gradually extracting primary relation tuples from the text information "his elder brother who has served as a soldier said, you are not like an officer". As shown in Table 1, extraction is performed on the text information "his elder brother who has served as a soldier said, you are not like an officer", and parameters of the obtained first primary relation tuple include "brother who has served as a soldier" and "you are not like an officer". Extraction is performed respectively on the parameters of the first primary relation tuple including "brother who has served as a soldier" and "you are not like an officer", so as to obtain parameters "his elder brother" and "soldier" of the first one of the second primary relation tuples and parameters "you" and "officer" of the second one of the second primary relation tuples. Then, extraction is continued on the respective parameters "his elder brother", "soldier", "you" and "officer" of the second primary relation tuples, this round of extraction does not extract any primary relation tuple, and the extraction process ends.

**Table 1**

| Text information (or parameter) | Core word | parameter |
|---|---|---|
| his elder brother who has served as a soldier said, you are not like an officer | {0} said, {1} | his elder brother who has served as a soldier; you are not like an officer |
| his elder brother who has served as a soldier | {0} has served as {1} | his elder brother; soldier |
| you are not like an officer | {0} are not like {1} | you; officer |
| his elder brother | Ø | Ø |
| soldier | Ø | Ø |
| you | Ø | Ø |
| officer | Ø | Ø |

The above extraction process is an iterative process, and an iterative decomposition device may be used for extraction. As shown in FIG. 2, the iterative decomposition device includes a primary relation decomposer and a memory. The iterative decomposition device may be regarded as an iterator, which is used to successively perform a primary relation decomposition (that is, extract a primary relation tuple) on text information and its derived parameters (that is, parameters obtained from the primary relation tuple) to obtain the core word and the primary relation tuple composed of parameters. While outputting a decomposition result, parameters in the decomposition result are stored in the memory. For all the derived parameters in the memory, the iterator takes them out and inputs them into the primary relation decomposer for processing repeatedly until the memory become empty.

In order to further describe the extraction process of the present application, Table 2 shows a more detailed extraction process, where the number of extractions and the extraction order are not completely consistent. In the process of extraction, the primary relation tuple extraction is first performed on the text information (that is, extraction is performed on the text information of the first layer), to obtain at least one parameter; then the primary relation tuple extraction is performed on each parameter in the at least one parameter (that is, extraction is performed on the parameters of the second layer), to obtain at least one second primary relation tuple; the primary relation tuple extraction is further performed on respective parameters of the at least one second primary relation tuple (that is, extraction is performed on the parameters of the third layer), to obtain at least one third primary relation tuple; similarly, the primary relation tuple extraction is performed on parameters of the obtained primary relation tuples in sequence, until a parameter of the newly obtained primary relation tuple does not include any relation tuple.

**Table 2**

| Number of extractions and number of extraction layers | Text information (or parameter) | Core word | parameter |
|---|---|---|---|
| 1 (first layer) | she knows that you are not an officer, because she has an elder brother who has served as a | {0}, because {1} | 1. she knows that you are not an officer |
| | | | 2. she has an elder brother who has served as a |
| | soldier said you don't have that stern temperament | | soldier said you don't have that stern temperament |
| 2 (second layer) | she knows that you are not an officer | {0} know {1} | 1. she |
| | | | 2. you are not an officer |
| 3 (third layer) | she | Ø | Ø |
| 4 (third layer) | you are not an officer | {0} are not {1} | 1. she |
| | | | 2. officer |
| 5 (fourth layer) | you | Ø | Ø |
| 6 (fourth layer) | officer | Ø | Ø |
| 7 (second layer) | she has an elder brother who has served as a soldier said you don't have that stern temperament | {0} has {1} | 1. she |
| | | | 2. an elder brother who has served as a soldier said you don't have that stern temperament |
| 8 (third layer) | she | Ø | Ø |
| 9 (third layer) | an elder brother who has served as a soldier said you don't have that stern temperament | {0} said {1} | 1. an elder brother who has served as a soldier |
| | | | 2. you don't have that stern temperament |
| 10 (fourth layer) | an elder brother who has served as a soldier | {0} has served as {1} | 1. elder brother |
| | | | 2. soldier |
| 11 (fifth layer) | an elder brother | Ø | Ø |
| 12 (fifth layer) | soldier | Ø | Ø |
| 13 (fourth layer) | you don't have that stern temperament | {0} don't have {1} | 1. you |
| | | | 2. that stern temperament |
| 14 (fifth layer) | you | Ø | Ø |
| 15 (fifth layer) | that stern temperament | {0} stern | 1. temperament |
| 16 (sixth layer)) | temperament | Ø | Ø |

Table 1 and Table 2 are examples of iterative decomposition of text information to achieve information extraction. The text information is decomposed to obtain core word(s) and parameter(s), and then primary relation tuple extraction is sequentially performed on the parameter(s) stored in the memory, until no new parameter is derived from the parameter(s) (that is, the memory becomes empty).

In this embodiment, by extracting a primary relation tuple from the text information, and then extracting a primary relation tuple from parameters of the obtained primary relation tuple, it can ensure that all the elements (each word and phrase) in the text information are covered, and at the same time, it is ensured that relation tuples included in other relation tuples also have the opportunity to be identified and processed. In addition, in the process of gradual extraction, the extracted objects (that is, parameters) gradually become shorter, which effectively avoids long-distance cascading errors in grammar and syntax, thereby improving the accuracy of information extraction.

In an embodiment of the present application, the obtaining the first primary relation tuple in the text information includes:

inputting the text information to a neural network model to obtain the first primary relation tuple of the text information, where the neural network model includes an encoder and a decoder, the encoder is configured to obtain an encoding feature according to the text information, and the decoder is configured to obtain the first primary relation tuple of the text information according to the encoding feature.

In this embodiment, when obtaining the first primary relation tuple of the text information, it can be realized by a neural network model (also called a primary relation parser or decomposer). The text information may not include a relation tuple, or may include one or more relation tuples. If the text information includes multiple relation tuples, one and only one is the primary relation tuple. The primary relation parser is used to identify whether there is a relation tuple in the text information; and identify and extract the primary relation tuple.

In this embodiment, the neural network model includes an encoder and a decoder. The encoder is configured to obtain an encoding feature according to the text information, and the decoder is configured to obtain the first primary relation tuple of the text information according to the encoding feature. The encoder may be determined by performing context prediction on unlabeled training corpus. A training process of the encoder includes: determining the encoding feature of the training corpus by predicting the context of the unlabeled training corpus. The training process is a process of adjusting an encoder parameter.

The encoder is obtained by learning from a large number of training corpora in an unsupervised manner. The encoder encodes context information of a word in a natural language during the learning process, and a neural network structure may be trained as encoder, such as bidirectional encoder representations from transformers (Bidirectional Encoder Representations from Transformers, referred to as BERT), embeddings from language models (Embeddings from Language Models, referred to as ELMo) and enhanced representation from knowledge integration (Enhanced Representation from kNowledge IntEgration, referred to as ERNIE). In this way, when training the neural network model, only small-scale data is labelled, and a high-precision result is obtained by fine adjusting the small-scale data. The above encoder determination method can reduce the data construction cost of constructing a neural network model. The decoder may use an end-to-end neural network decoder with a replication mechanism.

The process of training the neural network model includes: inputting labelled corpus into a basic model to obtain a primary relation tuple of the labelled corpus; and adjusting a parameter of the model based on the primary relation tuple of the labelled corpus and a primary relation labelled result of the labelled corpus. The primary relation labelled result of the labelled corpus is a primary relation tuple that has been labelled in advance. According to the primary relation tuple and the primary relation tuple obtained through the basic model, the parameter(s) of the basic model is adjusted to obtain the neural network model.

Further, in obtaining N primary relation tuples, the parameter(s) of the first primary relation tuple may also be inputted to the neural network model to obtain a second primary relation tuple. When extracting a parameter of the obtained primary relation tuple, the parameter(s) of the primary relation tuple is inputted to the neural network model to obtain a new primary relation tuple.

In the embodiments, the neural network model does not pay attention to all relation tuples, but only extracts primary relation tuples and ignores other relation tuples. The input of the neural network model is not limited to a sentence, but also includes a noun phrase or a text fragment of any form. A relation on which a parser focuses is not limited to a relation described by verbs, but also includes logical relations described or embodied by conjunctions, adverbs, and even punctuation, such as causality, adversative relation, conditional relation, and parallelism relation. The parser can automatically extract implicit relations, such as inferring "his elder brother has served as a soldier" from the noun phrase "his elder brother who has served as a soldier".

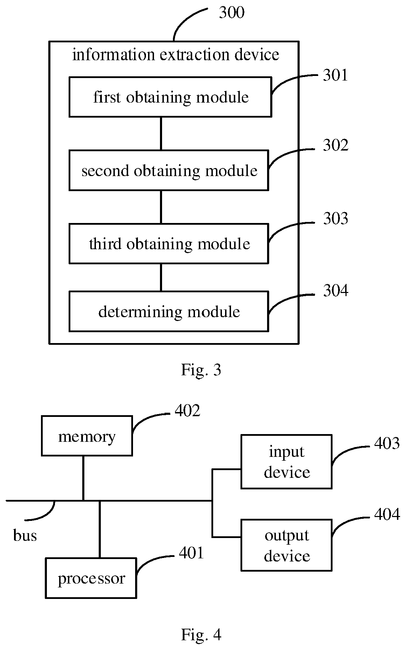

Referring to FIG. 3, FIG. 3 is a structural diagram of an information extraction device provided by an embodiment of the present application. As shown in FIG. 3, this embodiment provides an information extraction device 300, which includes:
a first obtaining module, configured to obtain text information;
a second obtaining module, configured to obtain a first primary relation tuple in the text information;
a third obtaining module, configured to obtain N primary relation tuples, where the N primary relation tuples include at least one second primary relation tuple obtained according to a parameter of the first primary relation tuple, and N is a positive integer; and
a determining module, configured to determine an information extraction result of the text information according to the first primary relation tuple and the N primary relation tuples,
where the first primary relation tuple is a relation tuple that is not included in other relation tuples in the text information, and the second primary relation tuple is a relation tuple that is not included in other relation tuples in the parameter of the first primary relation tuple.

In an embodiment of the present application, the N primary relation tuples further include:
at least one third primary relation tuple obtained from a parameter of the second primary relation tuple, where the third primary relation tuple is a relation tuple that is not included in other relation tuples in the parameter of the second primary relation tuple.

In an embodiment of the present application, the third obtaining module includes:
a first obtaining submodule, configured to obtain the at least one second primary relation tuple from the parameter of the first primary relation tuple; and
a second obtaining submodule, configured to primary relation tuple extraction on a parameter of a primary relation tuple obtained for an i-th time among the N primary relation tuples to obtain an (i+1)-th obtained primary relation tuple, where the at least one second primary relation tuple is a primary relation tuple obtained for a first time among the N primary relation tuples, and a parameter in a primary relation tuple obtained for a last time among the N primary relation tuples does not include a relation tuple, i being a positive integer less than or equal to the N.

In an embodiment of the present application, the second obtaining module is configured to:
input the text information to a neural network model to obtain the first primary relation tuple of the text information, where the neural network model includes an encoder and a decoder, the encoder is configured to obtain an encoding feature according to the text information, and the decoder is configured to obtain the first primary relation tuple of the text information according to the encoding feature.

In an embodiment of the present application, the encoder is determined by performing context prediction on unlabeled training corpus.

The information extraction device 300 can implement various processes implemented by the electronic equipment in the method embodiments shown in FIG. 1, and in order to avoid repetition, details are not described herein again.

According to the embodiments of the present application, the information extraction device 300 obtains text information; obtains a first primary relation tuple in the text information; obtains N primary relation tuples, where the N primary relation tuples include at least one second primary relation tuple obtained according to a parameter of the first primary relation tuple, and N is a positive integer; and determines an information extraction result of the text information according to the first primary relation tuple and the N primary relation tuples, where the first primary relation tuple is a relation tuple that is not included in other relation tuples in the text information, and the second primary relation tuple is a relation tuple that is not included in other relation tuples in the parameter of the first primary relation tuple. When extracting the text information, the first primary relation tuple of the text information is extracted first, and then a primary relation tuple is extracted from the parameter of the first primary relation tuple, thus this method of gradual extraction from a large range to a small range (i.e., a length of the text included in the object for the primary relation tuple extraction is gradually shortened) can make ranges covered by the extraction more detailed, so as to obtain the more complete and more accurate extraction result.

According to embodiments of the present application, the present application also provides electronic equipment and a readable storage medium.

As shown in FIG. 4, it is a block diagram of electronic equipment used to implement an information extraction method of an embodiment of the present application. The electronic equipment is intended to represent various forms of digital computers, such as laptop computer, desktop computer, workstation, personal digital assistant, server, blade server, mainframe computer, and other suitable computers. The electronic equipment can also represent various forms of mobile devices, such as personal digital processing, cellular phone, smart phone, wearable device, and other similar computing devices. For the components shown herein, their connections, relations and functions are merely examples, and are not intended to limit the implementations of the present application described and/or required herein.

As shown in FIG. 4, the electronic equipment includes one or more processors 401, a memory 402, and an interface for connecting various components, including a high-speed interface and a low-speed interface. The various components are connected to each other by using different buses, and may be installed on a common motherboard or installed in other ways as needed. The processor may process instructions executed in the electronic equipment, which includes instructions stored in or on the memory to display graphical information of GUI on an external input/output device (such as a display device coupled to the interface). In other embodiments, if necessary, multiple processors and/or multiple buses may be used with multiple memories. Similarly, multiple electronic equipment can be connected, and each equipment provides necessary operations (for example, as a server array, a group of blade servers, or a multi-processor system). In FIG. 4, one processor 401 is taken as an example.

The memory 402 is a non-transitory computer-readable storage medium provided by the present application. The memory stores instructions executable by at least one processor, so as to cause the at least one processor to execute the information extraction method provided in the present application. The non-transitory computer-readable storage medium of the present application stores a computer instruction, and the computer instruction is used to make a computer execute the information extraction method provided in the present application.

The memory 402, as a non-transitory computer-readable storage medium, can be configured to store non-transitory software programs, non-transitory computer-executable programs, and modules, such as program instructions/modules corresponding to the information extraction method in the embodiments of the present application (for example, the first obtaining module 301, the second obtaining module 302, the third obtaining module 303, and the determining module 304 shown in FIG. 3). The processor 401 executes various functional applications and data processing of a server by executing the non-transitory software programs, instructions, and modules stored in the memory 402, that is, to implement the information extraction method in the foregoing method embodiments.

The memory 402 may include a storage program area and a storage data area. The storage program area may store an operating system and an application program required by at least one function; and the storage data area may store data created according to the use of electronic equipment that implements the information extraction method, and the like. In addition, the memory 402 may include a high-speed random access memory, and may also include a non-transitory memory, such as at least one magnetic disk storage device, a flash memory device, or other non-transitory and solid-state storage devices. In some embodiments, the memory 402 may optionally include a memory remotely provided with respect to the processor 401, and the remote memory may be connected to electronic equipment that implements the information extraction method through a network. Examples of the aforementioned network include, but are not limited to, Internet, corporate intranet, local area network, mobile communication network, and a combination thereof.

The electronic equipment implementing the information extraction method may further include: an input device 403 and an output device 404. The processor 401, the memory 402, the input device 403, and the output device 404 may be connected by a bus or in other ways. In FIG. 4, the connection by a bus is taken as an example.

The input device 403 may receive input digital or character information, and generate key signal input related to user settings and function control of the electronic equipment that implements the information extraction method, which are touch screen, keypad, mouse, track pad, touch pad, pointing stick, one or more mouse buttons, trackball, joystick and other input devices. The output device 404 may include a display device, an auxiliary lighting device (for example, LED), a tactile feedback device (for example, a vibration motor), and the like. The display device may include, but not limited to, a liquid crystal display (LCD), a light emitting diode (LED) display, and a plasma display. In some embodiments, the display device may be a touch screen.

Various implementations of the systems and techniques described herein can be implemented in a digital electronic circuit system, an integrated circuit system, a specific ASIC (specific integrated circuit), computer hardware, firmware, software, and/or combinations thereof. These various embodiments may be implemented in one or more computer programs, and the one or more computer programs may be executed and/or interpreted on a programmable system including at least one programmable processor. The programmable processor may be a dedicated or general-purpose programmable processor that can receive data and instructions from a storage system, at least one input device, and at least one output device, and transmit the data and instructions to the storage system, the at least one input device, and the at least one output device.

These computing programs (also referred to as programs, software, software applications, or codes) include machine instructions of a programmable processor, and may be implemented by using a high-level procedure and/or an object-oriented programming language, and/or an assembly/machine language. As used in this specification, the terms "machine-readable medium" and "computer-readable medium" refer to any computer program product, equipment, and/or device used to provide machine instructions and/or data to a programmable processor (for example, magnetic disk, optical disk, memory, programmable logic device (PLD)), which include a machine-readable medium that receives machine instructions as a machine-readable signal. The term "machine-readable signal" refers to any signal used to provide machine instructions and/or data to a programmable processor.

To facilitate user interaction, the system and technique described herein may be implemented on a computer. The computer is provided with a display device (for example, a cathode ray tube (CRT) or liquid crystal display (LCD) monitor) for displaying information to a user, a keyboard and a pointing device (for example, a mouse or a track ball). The user may provide an input to the computer through the keyboard and the pointing device. Other kinds of devices may be provided for user interaction, for example, a feedback provided to the user may be any manner of sensory feedback (e.g., visual feedback, auditory feedback, or tactile feedback); and input from the user may be received by any means (including sound input, voice input, or tactile input).

The system and technique described herein may be implemented in a computing system that includes a back-end component (e.g., as a data server), or a computing system that includes a middle-ware component (e.g., an application server), or a computing system that includes a front-end component (e.g., a client computer having a graphical user interface or a Web browser through which a user can interact with an implementation of the system and technique), or a computing system that includes any combination of such back-end, middleware, or front-end component. The components of the system can be interconnected by digital data communication (e.g., a communication network) in any form or medium. Examples of the communication network include a local area network (LAN), a wide area network (WAN) and the Internet.

The computer system can include a client and a server. The client and server are generally remote from each other and typically interact through a communication network. The relationship of client and server arises by virtue of computer programs running on respective computers and having a client-server relationship to each other.

The technical solutions of the embodiments of the present application can obtain the following beneficial effects:
text information is obtained; a first primary relation tuple in the text information is obtained; N primary relation tuples is obtained, where the N primary relation tuples include at least one second primary relation tuple obtained according to a parameter of the first primary relation tuple, and N is a positive integer; and an information extraction result of the text information is determined according to the first primary relation tuple and the N primary relation tuples, where the first primary relation tuple is a relation tuple that is not included in other relation tuples in the text information, and the second primary relation tuple is a relation tuple that is not included in other relation tuples in the parameter of the first primary relation tuple. When extracting the text information, the first primary relation tuple of the text information is extracted first, and then a primary relation tuple is extracted from the parameter of the first primary relation tuple, thus this method of gradual extraction from a large range to a small range (i.e., a length of the text included in the object for the primary relation tuple extraction is gradually shortened) can make ranges covered by the extraction more detailed, so as to obtain the more complete and more accurate extraction result.

More primary relation tuples are obtained by performing primary relation tuple extraction on the parameter(s) of the second primary relation tuple. This manner of performing primary relation tuple extraction on parameter(s) of the obtained primary relation tuples can make the extraction coverage more detailed, so as to obtain the more complete and accurate extraction result.

By extracting a primary relation tuple from the text information, and then extracting a primary relation tuple from parameters of the obtained primary relation tuple, it can ensure that all the components (each word and phrase) in the text information are covered, and at the same time, it is ensured that relation tuples included in other relation tuples also have the opportunity to be identified and processed. In addition, in the process of gradual extraction, the extracted objects (that is, parameters) gradually become shorter, which effectively avoids long-distance cascading errors in grammar and syntax, and improves the accuracy of information extraction. The neural network model includes an encoder and a decoder. Through the neural network model, the primary relation tuples can be extracted from the text information to improve the extraction accuracy.

The neural network model includes an encoder and a decoder. Primary relation tuples can be extracted from text information through the neural network model, which improves the extraction accuracy.

The encoder can be determined by performing context prediction on the unlabeled training corpus. This encoder determination method can reduce the data construction cost of constructing the neural network model.

It is appreciated, all forms of processes shown above may be used, and steps thereof may be reordered, added or deleted. For example, as long as the expected result of the technical solution of the present disclosure can be achieved, steps set forth in the present disclosure may be performed in parallel, performed sequentially, or performed in a different order, and there is no limitation in this regard.

The foregoing specific implementations constitute no limitation to the protection scope of the present disclosure. It is appreciated by those skilled in the art, various modifications, combinations, sub-combinations and replacements may be made according to design requirements and other factors. Any modifications, equivalent replacements and improvements made within the spirit and principle of the present disclosure shall fall within the scope of the present disclosure.

## Claims

1. An information extraction method, **characterized by** comprising:
obtaining (101) text information;
obtaining (102) a first primary relation tuple in the text information;
obtaining (103) N primary relation tuples, wherein the N primary relation tuples comprise at least one second primary relation tuple obtained according to a parameter of the first primary relation tuple, and N is a positive integer; and
determining (104) an information extraction result of the text information according to the first primary relation tuple and the N primary relation tuples,
wherein the first primary relation tuple is a relation tuple that is not comprised in other relation tuples in the text information, and the second primary relation tuple is a relation tuple that is not comprised in other relation tuples in the parameter of the first primary relation tuple.

2. The information extraction method according to claim 1, wherein the N primary relation tuples further comprise:
at least one third primary relation tuple obtained from a parameter of the second primary relation tuple, wherein the third primary relation tuple is a relation tuple that is not comprised in other relation tuples in the parameter of the second primary relation tuple.

3. The information extraction method according to claim 1, wherein the obtaining (103) the N primary relation tuples comprises:
obtaining the at least one second primary relation tuple from the parameter of the first primary relation tuple; and
performing primary relation tuple extraction on a parameter of a primary relation tuple obtained for an i-th time among the N primary relation tuples, to obtain an (i+1)-th obtained primary relation tuple, wherein the at least one second primary relation tuple is a primary relation tuple obtained for a first time among the N primary relation tuples, and a parameter in a primary relation tuple obtained for a last time among the N primary relation tuples does not comprise a relation tuple, i being a positive integer less than or equal to the N.

4. The information extraction method according to claim 1, wherein the obtaining (102) the first primary relation tuple in the text information comprises:
inputting the text information to a neural network model to obtain the first primary relation tuple of the text information, wherein the neural network model comprises an encoder and a decoder, the encoder is configured to obtain an encoding feature according to the text information, and the decoder is configured to obtain the first primary relation tuple of the text information according to the encoding feature.

5. The information extraction method according to claim 4, wherein the encoder is determined by performing context prediction on unlabeled training corpus.

6. An information extraction device, **characterized by** comprising:
a first obtaining module (301), configured to obtain text information;
a second obtaining module (302), configured to obtain a first primary relation tuple in the text information;
a third obtaining module (303), configured to obtain N primary relation tuples, wherein the N primary relation tuples comprise at least one second primary relation tuple obtained according to a parameter of the first primary relation tuple, and N is a positive integer; and
a determining module (304), configured to determine an information extraction result of the text information according to the first primary relation tuple and the N primary relation tuples,
wherein the first primary relation tuple is a relation tuple that is not comprised in other relation tuples in the text information, and the second primary relation tuple is a relation tuple that is not comprised in other relation tuples in the parameter of the first primary relation tuple.

7. The information extraction device according to claim 6, wherein the N primary relation tuples further comprise:
at least one third primary relation tuple obtained from a parameter of the second primary relation tuple, wherein the third primary relation tuple is a relation tuple that is not comprised in other relation tuples in the parameter of the second primary relation tuple.

8. The information extraction device according to claim 6, wherein the third obtaining module (303) comprises:
a first obtaining submodule, configured to obtain the at least one second primary relation tuple from the parameter of the first primary relation tuple; and
a second obtaining submodule, configured to perform primary relation tuple extraction on a parameter of a primary relation tuple obtained for an i-th time among the N primary relation tuples, to obtain an (i+1)-th obtained primary relation tuple, wherein the second primary relation tuple is a primary relation tuple obtained for a first time among the N primary relation tuples, and a parameter in a primary relation tuple obtained for a last time among the N primary relation tuples does not comprise a relation tuple, i being a positive integer less than or equal to the N.

9. The information extraction device according to claim 6, wherein the second obtaining module (302) is configured to:
input the text information to a neural network model to obtain the first primary relation tuple of the text information, wherein the neural network model comprises an encoder and a decoder, the encoder is configured to obtain an encoding feature according to the text information, and the decoder is configured to obtain the first primary relation tuple of the text information according to the encoding feature.

10. The information extraction device according to claim 9, wherein the encoder is determined by performing context prediction on unlabeled training corpus.

11. Electronic equipment, **characterized by** comprising:
at least one processor (401); and
a memory (402) communicatively connected to the at least one processor (401),
wherein the memory (402) stores an instruction that is executable by the at least one processor (401), and the instruction, when executed by the at least one processor (401), causes the at least one processor (401) to implement the method according to any one of claims 1 to 5.

12. A non-transitory computer-readable storage medium, **characterized by** storing a computer instruction, wherein the computer instruction is configured to be executed by a computer to implement the method according to any one of claims 1 to 5.

13. A computer program product, **characterized by** comprising a computer instruction that, when executed by a computer, causes the computer to implement the method according to any one of claims 1 to 5.
